# EUROPEAN PATENT SPECIFICATION

(11) **EP 1 001 217 B1**
(45) Date of publication and mention of the grant of the patent: **17.12.2003**
(21) Application number: 99116103.5
(22) Date of filing: 17.08.1999
(51) Int. Cl.: F23G 5/44

(54) **Waste feeder**
Abfallbeschickungsvorrichtung
Dispositif d'alimentation en déchets

(30) Priority: 12.11.1998 JP 32190198
(43) Date of publication of application: 17.05.2000
(73) Proprietor: NKK CORPORATION, Tokyo (JP)
(72) Inventor: Noto, Takashi, Kawasaki-ku, Kawasaki 210 (JP); Takasu, Nobuo, Kawasaki-ku, Kawasaki 210 (JP); Akiyama, Hajime, Kawasaki-ku, Kawasaki 210 (JP)
(74) Representative: HOFFMANN - EITLE

(56) References cited:
- WO-A-98/37363
- DE-A- 4 438 421
- DE-U- 29 718 002
- US-A- 4 996 930

## Description

### BACKGROUND OF THE INVENTION

### 1. Field of the Invention

The present invention relates to a waste feeder used in a waste disposing plant for disposing of municipal garbage or industrial waste.

### 2. Description of the Related Arts

Municipal garbage or combustible industrial waste is transported on garbage trucks and charged into garbage pits in garbage bags. Waste charged into the garbage pits is grasped by a garbage crane, dumped into a garbage charging hopper, and sequentially fed into an incinerator. In general, a sealing layer for sealing off furnace gases produced from waste is formed between the open air and the furnace under the garbage charging hopper, with a waste dust feeder installed downstream thereof, and waste is fed into the furnace by means of the waste dust feeder.

In waste disposal furnaces, maintenance of constant amounts of waste fed into the furnace is deemed to be an important factor determining the concentration of toxic combustion products such as dioxin generated during and after heat treatment. Air, or an oxidizer such as oxygen, in amounts corresponding to the average amounts of waste fed per unit period of time is fed into the furnace. Changes in the amount of waste supplied causes charges in the amounts of reaction with the oxidizer and the like, resulting in unstable combustion conditions or unstable thermal cracking processes, and this causes production of dioxin and other toxic substances in the incomplete combustion products.

Further, in the waste disposal furnace, deterioration of containment of furnace gases at the waste charging port leads to changes in the combustion reaction in the furnace. This results in large changes in the furnace pressure, with an unstable combustion process or an unstable thermal cracking process, and thus is a factor in the production of carbon monoxide, dioxin, and other detrimental substances.

Waste feeders having improved containment of the furnace gas at the waste charging port in the waste disposing furnace have been developed. As a conventional example of such waste feeders, (1) Japanese Unexamined Patent Publication No. 08-61623 discloses a dust feeder for a waste incinerator having improved bag breaking and shredding, constant-amount feedability of waste, and containment of furnace gases.

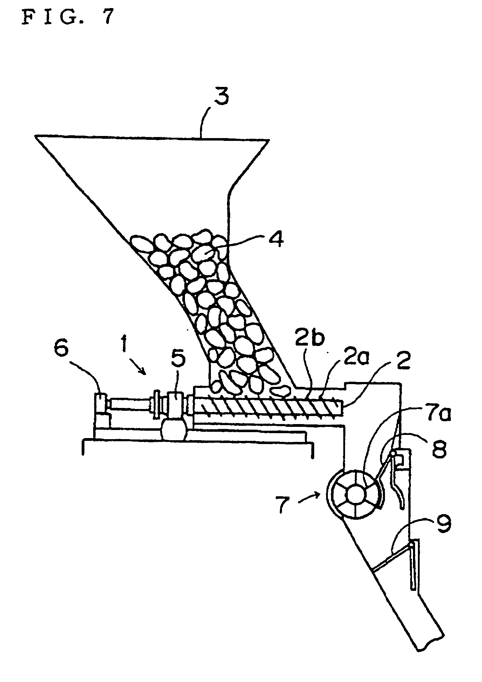

The dust feeder of the conventional example (1) will now be described with reference to Fig. 7. The feeder 1 shown in Fig. 7 has bag-breaking and shredding functions. A screw shaft 2 has a large-diameter screw blade 2a and a small-diameter screw-blade 2b. Claws for breaking bags are provided on the large-diameter screw-blade 2a and the small-diameter screw blade 2b. The screw shaft 2 is rotatably supported by a bearing mechanism 5 so as to be rotated by a driving mechanism 6. A rotary feeder 7 provided with a rotary blade 7a is provided below an exit of the feeder 1, and a sealing plate 8 is provided in a waste feed path. A flap damper 9 is arranged at a chute section.

A garbage bag 4 is charged into a garbage charging hopper 3, passes down therethrough, and is fed into the feeder 1. By the action of the large-diameter screw blade 2a and the small-diameter screw blade 2b attached to the rotating screw shaft 2 and the claws thereof, the garbage bag 4 is broken under the effect of its revolving force. Waste discharged upon bag breakage is transferred by the rotation force of the screw shaft 2 onto the exit side, and rotation of the rotary feeder 7 presses the sealing plate 8, thus feeding the waste into the furnace.

The waste feeder of the conventional example (1) has superior ability to maintain constant feed amounts compared with older types of feeders. However, because of the use of the screw conveyor, in this feeder, string or fibrous refuse may become twisted around the screw shaft 2, large-diameter and small-diameter screw blades 2a and 2b, and the claws, gradually narrowing the waste feed path of the feeder, leading to clogging. Even when the waste is shredded in a pre-treatment process prior to being sent to the waste feeder and is then sent to the waste feeder, although large lumps are reduced in size, string and fibrous refuse are not cut and pass through the shredder. In the case of a screw conveyor, it is difficult to avoid problems such as entanglement and clogging. Operation of an incinerator or the like under such conditions may exert an adverse effect on stable operation of the furnace, and this may be a factor causing problems.

US 4,996,930 A refers to a system in a method for feeding contaminated earth or other material into an incineration unit. The apparatus comprises a suitable feeder which forms a continuous agglomeration to create a plug. The feeder includes a pair of intermeshing counterrotating screws or one single rotating screw. Further, the screws are disposed in a housing or barrel. The screws have relatively big shafts and intermeshing flights which terminate at a predetermined distance short of the discharge end of the barrel. The shaft extends the whole longitudinal distance of the barrel. The screws are only fixed at the end and do not extend in a radial direction to the outer circumference of the shaft.

WO 98/37363 A discloses a combustion device for solid fuel comprising a fuel conveyor which supplies fuel to a combustion chamber. The conveyor comprises a rotation shaft to which one end of a screw conveyor, consisting of a helical spring, is fixed. Further, a casing member to cover the screw conveyor is provided.

### SUMMARY OF THE INVENTION

It is an object of the present invention to provide a waste feeder which is not significantly affected by entanglement of string or fibrous refuse mixed in with garbage bags and permits stable feeding over long periods of time.

To achieve the object, the present invention provides a waste feeder according to claim 1.

According to the waste feeder, in which a shaft running through in the transporting direction of waste is not provided, the waste feeder has a high transport volumetric ratio and a function of minimizing entanglement of string or fibrous refuse.

The waste feeder further comprises casing members covering at least a part of the spiral conveyor. Since the spiral conveyor is thus covered with the casing member and the waste is transported between the casing members, maintenance of constant feed and containment are improved.

Preferred embodiments are defined by the dependent claims.

In the waste feeder, the spiral conveyor preferably has one single rotation shaft or a plurality of parallel shafts. By adopting a single shaft or a plurality of parallel shafts, depending upon the amount of waste fed into the furnace, it is possible to feed an amount in response to, for example, the capacity of the combustion chamber in the furnace.

The casing member covering at least a part of the spiral conveyor preferably has a lower casing member, having a lining layer formed thereon, arranged below the spiral conveyor. By forming the lining layer on at least the lower casing member of the spiral conveyor, it is possible to smoothly transport the waste on the spiral conveyor to the discharge port.

In the waste feeder, there is preferably a gap within a range of from 0 to 150 mm between the spiral member and the casing member thereof. By minimizing the gap between the spiral member and the casing member, maintenance of constant feed and containment are improved.

In the waste feeder, the spiral member preferably has a spiral having a pitch within a range of from 100 to 500 mm. Because the waste is fed while entering into the grooves of the spiral of the spiral member, a feeder conforming to, for example, the size of waste can be achieved by changing the pitch in response to the type, material, and size of the waste to be incinerated in the furnace.

The spiral member preferably has an outside diameter within a range of from 50 to 500 mm. Since the waste is fed while entering into the diameter of the spiral of the spiral member, it is possible to achieve a feeder capable of adjusting the amount of feed and coping with the kind of waste by making the diameter variable in response to the type, material, and size of the waste to be incinerated in the furnace.

The spiral member preferably rotates within a range of from 1 to 30 rpm. By changing rotation speed of the spiral member, it is possible to change the amount of waste to be fed into the furnace.

Further, a preferred use of the present invention is defined by claim 9.

According to the waste feeder, a central shaft is not provided in the spiral conveyor as in the conventional screw conveyor. The waste is therefore transported while filling the spiral grooves of the spiral conveyor. More specifically, because of the absence of a central shaft in the spiral conveyor, it is possible for the transfer volume ratio to be large. Since the waste filling the spiral threads is transported, it is possible to improve the containment of combustion gases in the furnace in the waste feeder.

In the waste feeder, the spiral conveyor comprises a spiral member for transporting waste and a rotation shaft provided at least at an end of the spiral member. Unlike a conventional spiral conveyor in which a spiral member is formed around a rotation shaft, the rotation shaft for rotating the spiral member is provided at an end or at both ends of the spiral member, and the waste pushed into grooves of the spiral member is pushed forward along with rotation of the spiral member to the discharge port.

### BRIEF DESCRIPTION OF THE DRAWINGS

Fig. 1 is a schematic view illustrating an embodiment of the waste feeder of the present invention;
Fig. 2 is a side view illustrating a portion of the spiral conveyor shown in Fig. 1;
Fig. 3A is a partially cutaway sectional view of the waste feeder shown in Fig. 1;
Fig. 3B is a partially cutaway longitudinal sectional view of the waste feeder shown in Fig. 1;
Fig. 3C is another partially cutaway longitudinal sectional view of the waste feeder shown in Fig. 1;
Fig. 3D is a partially cutaway schematic view of the waste feeder shown in Fig. 1;
Fig. 3E is another partially cutaway schematic view of the waste feeder shown in Fig. 1;
Fig. 4 is a schematic view illustrating another embodiment of the waste feeder of the invention;
Fig. 5 is a view illustrating another embodiment of the spiral conveyor;
Fig. 6 is a descriptive view of another embodiment of the waste feeder of the invention; and
Fig. 7 is a view illustrating a conventional waste feeder.

### DESCRIPTION OF THE PREFERRED EMBODIMENTS

Embodiments of the waste feeder of the present invention will now be described with reference to the drawings. The waste feeder of the invention is used for feeding waste to a waste disposal plant. The waste disposal plant is, for example, a waste incinerator, a waste pyrolytic furnace, a waste melting furnace, or a furnace for heat-treating waste at a temperature of at least 300°C.

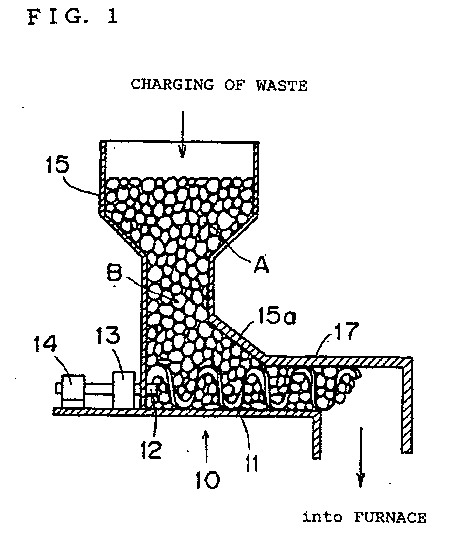

The following description will be made with reference to Figs. 1 to 6. Fig. 1 is a schematic view illustrating an embodiment of the waste feeder used for a waste disposal plant of the present invention. The waste feeder comprises a garbage charging hopper 15 for charging waste A and a spiral conveyor 10 provided under the garbage charging hopper 15. This feeder is for feeding the waste A to be charged into garbage charging hopper 15 to the above-mentioned waste disposal plant. The spiral conveyor 10 comprises a spiral member 11, a rotation shaft 12 provided at an end of the spiral member 11 for rotating the spiral member 11, a bearing mechanism 13 for rotatably supporting the rotation shaft 12, and a driving mechanism 14 for rotating the rotation shaft 12. The leading end portion of the spiral conveyor 10 is covered with a casing member 17. To avoid formation of a hopper jam by the waste A, the waste charging section of the spiral conveyor 10 is provided with a slanting wall 15a. In Fig. 1, a charging chute section for charging waste A from the waste feeder into a waste disposal furnace or the like is omitted.

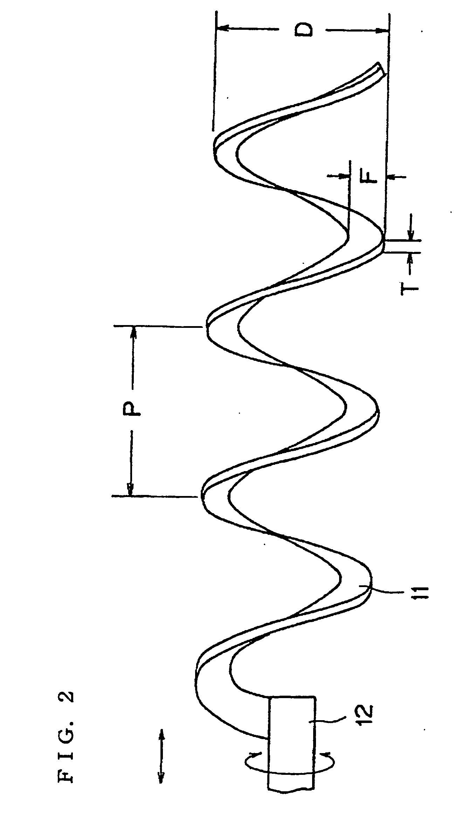

Fig. 2 is a side view illustrating a portion of the spiral conveyor of the waste feeder shown in Fig. 1. The spiral conveyor comprises a spiral member 11 made of, for example, a steel section, and a rotation shaft 12 provided at an end of the spiral member 11. D represents the diameter of the spiral member 11, and P represents the pitch of the spiral member 11. The spiral member 11 forms spiral grooves at a prescribed pitch, and upon rotation of the rotation shaft 12, the waste is transported.

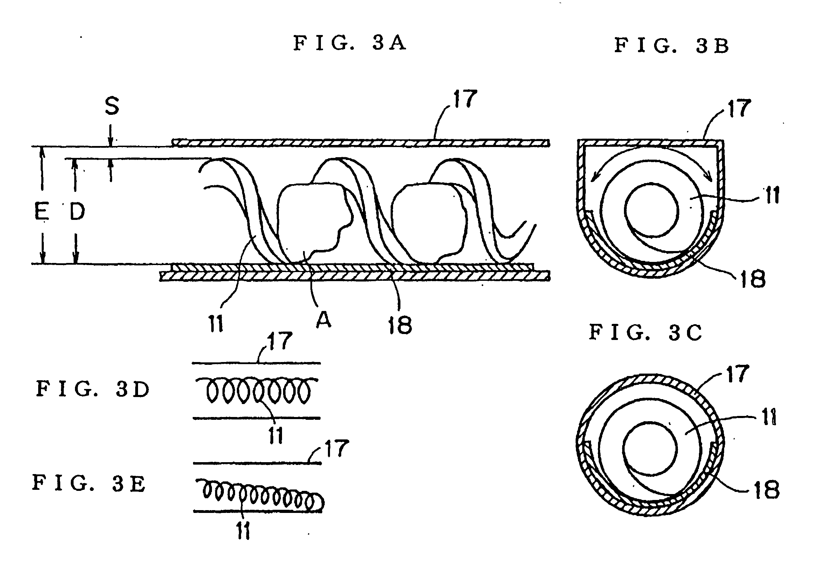

Important portions of the waste feeder shown in Fig. 1 will now be described with reference to Figs. 3A to 3C. As shown in Fig. 3, a part of the spiral member 11 (discharge side of waste) is covered by the casing member 17 so that the lower part of the spiral member is in contact with the casing member 17. The spiral member 11 may be floating as shown in Fig. 3D, or the leading end portion thereof may be in contact with the casing member 17 as shown in Fig. 3E. The casing member 17 has an inverted semicircular, circular, or elliptical cross sectional shape as shown in Figs. 3B and 3C. On the inner surface of the casing member 17 of the spiral member 11, a lining layer 18 is formed, covering the area from directly below the spiral member 11 to the side surface in order to facilitate sliding of the waste A. The waste A enters and fills the spaces between pitches of the spiral member 11, and the waste A is transported in maximal amounts upon passing through the inner sectional space of the casing member 17. The lining layer 18, which is formed at least directly below the spiral member 11, may be formed on the entire inner surface of the casing member 17.

The present invention will be described further in detail with reference to Figs. 1 to 5. The portion for the formation of a sealing layer B by the waste A charged from the garbage charging hopper 15, i.e., the portion to be sent to the spiral conveyor 10 should preferably have an opening of at least 500 x 500 mm. If the opening size is smaller than this, garbage may form a blockage in the chute at the portion where the waste A forms the sealing layer B, thus making it impossible to transport the waste A.

Transportation of the waste A differs from that for earth, sand, or powder in that fluctuations in the shape and conditions are very large. When the waste A is an industrial waste containing substantial amounts of municipal refuse, waste plastic, and waste wood, the spiral member 11 of the spiral conveyor 10 should have a spiral pitch P within a range of from 100 to 500 mm, with a diameter D within a range of from 50 to 500 mm. A gap S between the outer diameter D of the spiral member 11 and the inner diameter E of the casing member within a range of from 0 to 150 mm permits feeding of the waste in a constant amount.

With a spiral pitch P of the spiral member 11 of the spiral conveyor under 100 mm, it is difficult for the waste A to enter the conveyor, thus causing a change in the amount of waste A fed into the furnace. When the pitch P and the diameter D are larger than 500 mm, it is difficult to manufacture the spiral member 11, and unless a special and expensive material is used, it is difficult for it to have a long service life. However, by adopting a size of the spiral member 11 of the spiral conveyor 10 within the above-mentioned ranges, the spiral member 11 may be made of an ordinary steel section, depending upon characteristics of the waste to be treated in the furnace. The material for the casing member 17, depending upon characteristics of the waste, may be a steel section in an ordinary case. The width F of the steel section for the spiral member 11 should preferably be within a range of from 0.10 to 0.35 times the diameter D, although this is not so limited.

On the other hand, the spiral member 11 is made by winding a circular, elliptical, or strip-shaped sheet in a coil into a square shape or the like. The spiral member 11 has a long rectangular shape, and a thickness of at least 8 mm. When the spiral member 11 has a diameter D of under 50 mm, it is difficult to make a spiral which is free from strain with a pitch larger than 100 mm. The limit is therefore 100 mm. The gap S between the spiral member 11 and the casing member 17 should be 150 mm at maximum. When the gap is over this level, the waste accumulates there, and after a period of time in this state, corrosion of the casing member 17 is caused by the waste A, thus making feeding of the waste A unstable.

Further, the rotation of the spiral member 11 of the spiral conveyor 10 should preferably be within a range of from 1 to 30 rpm. When heat-treating the waste A, it is necessary to feed the waste in periods of up to several tens of seconds with a view to ensuring constant combustion or gasification reaction. With rotation of the spiral member 11 under 1 rpm, the waste A filling the spaces between the spiral grooves is charged in an amount of under one rotation per minute. This causes deterioration of the maintenance of a constant feed amount, thus causing an incomplete reaction in the furnace. With rotation of the spiral conveyor of over 30 rpm, abnormal vibrations caused by differences between the propulsion force received by the waste A from the conveyor and the frictional force from the floor surface is produced in the space between the spiral conveyor 10 and the casing member 17, thus making it difficult to carry out stable operations.

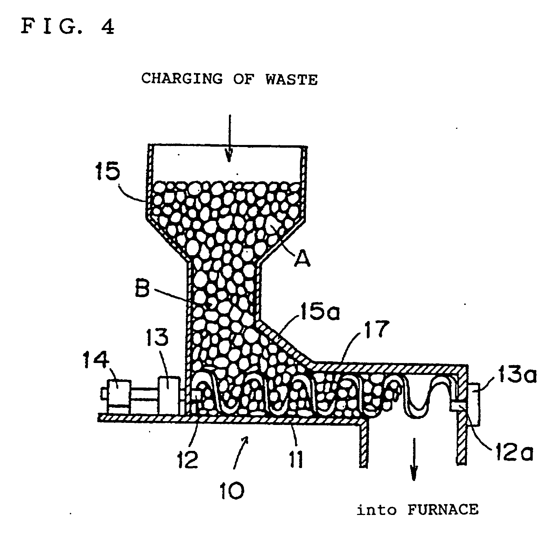

The spiral conveyor 10 may have a cantilever structure, being supported by the waste feeder via a bearing mechanism 13 as in the above-mentioned embodiment, or a center support structure in which, as shown in Fig. 4, rotation shafts 12 and 12a are provided at both ends of the spiral member 11, and these rotation shafts 12 and 12a are supported by bearing mechanisms 13 and 13a. The cantilever structure should preferably be adopted when the spiral conveyor 10 is arranged for feeding the waste. The presence of a support on the feeding side of the waste A may cause clogging by the waste. As in the embodiment shown in Fig. 4, however, problems due to clogging can be reduced by adopting a structure avoiding clogging of the waste A by throwing the rotation shaft 12a of the spiral member 11 of the spiral conveyor 10 across the opening so as to support the same with the bearing mechanism 13a.

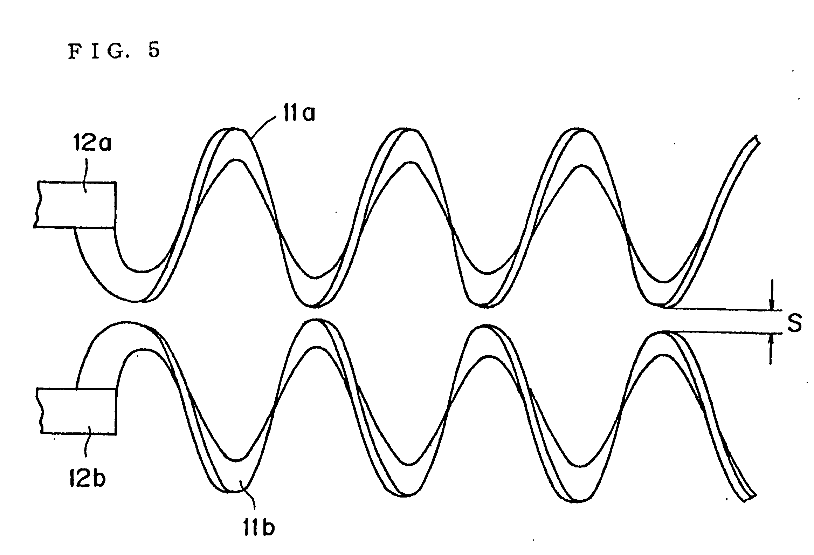

As shown in Fig. 5, the spiral conveyor 10 has spiral members 11a and 11b in parallel with each other with two shafts. Whereas, with a single-shaft spiral member, the amount of the transported waste A is naturally limited, the two parallel shafts permit feeding of the waste A in an amount about twice as large as that in the case of the single shaft. The number of shafts is of course not limited, but it is possible to adopt a plurality of parallel shafts, such as seven shafts or eight shafts. In a spiral conveyor having a plurality of parallel shafts, the amount of supplied waste can be controlled by changing the size, such as the pitch P or the diameter D. In a spiral conveyor having spiral members 11 arranged with parallel shafts, it is advisable that the gap S between the spiral members 11 should be up to 150 mm. With a gap S larger than this, the waste accumulates there, and after a certain period of time in this state, feeding of the waste becomes unstable and corrosion of the casing member is caused.

Incineration of waste by the waste feeder of the present embodiment will now be described with reference to Fig. 1. First, the waste A is industrial waste containing municipal refuse, sewage sludge, human waste sludge, waste wood, waste plastic, waste liquid, waste oil, old tires, and combustible substances. The waste may take various forms as above. When a more stable furnace operation is required, the waste is shredded through a shredder and is then fed into the waste feeder.

The waste A, such as municipal refuse, is charged into the garbage pit of the waste disposing furnace. The waste A charged into the garbage pit is grasped by a garbage crane and charged into the garbage charging hopper 15. The waste A is then continuously fed by the waste feeder provided with the spiral conveyor 10 into the incinerator. Containment is maintained by the formation of a sealing layer B by the waste A so as to block contact between the open air and the furnace interior by maintaining the waste level in the garbage charging hopper 15 at a prescribed hopper level. In place of forming the sealing layer B by the waste A, containment may be improved by adding a double flap damper at the waste chute portion. By using the waste feeder of this embodiment, however, a high level of containment can be maintained and the waste A can be stably supplied without installing a flap damper.

### Examples

The waste feeder of the present invention in actual use will now be described with reference to Fig. 1. In Fig. 1, a waste feeder provided with a spiral conveyor is installed for a fluidized bed type waste incinerator. In order to achieve an optimum shape for municipal refuse, waste plastic, and waste wood, the pitch P and the diameter D of the spiral member 11 of the spiral conveyor was made variable within a range of from 50 to 600 mm, and further, the size of the spiral portion was varied within a range of from 4 to 100 mm for testing. This suggested that performance at almost the same level was available in operation of the waste feeder if the pitch P was within a range of 300 ± 100 mm and the diameter D was within a range of 300 ± 100 mm.

The conveyor rotation of the spiral conveyor 10 was controlled within a range of from 1 to 30 rpm. As a result of a test carried out by changing the gap between the casing member 17 and the spiral conveyor of the waste feeder within a range of from 0 to 150 mm, it was demonstrated that a gap within a range of 35 ± 25 mm was appropriate for municipal refuse. As shown in Fig. 3, a liner layer 18 was provided on the casing member 17 to prevent friction caused by the waste.

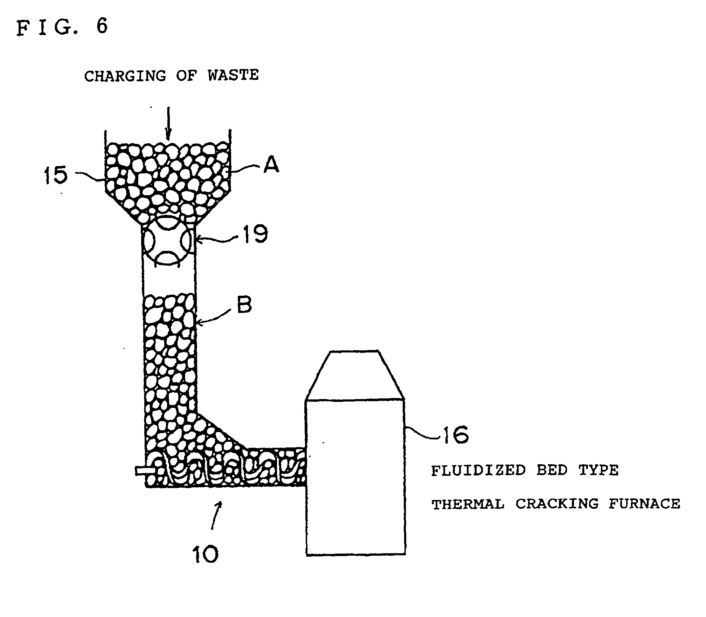

An operating test was carried out in a fluidized bed type thermal cracking furnace shown in Fig. 6.

Fig. 6 illustrates the fluidized bed type thermal cracking furnace provided with a waste feeder having a spiral conveyor 10. Municipal refuse charged by a garbage crane into the garbage charging hopper was first shredded in a shredder 19, formed a garbage sealing layer B in the chute above the waste feeder, sent to the waste feeder provided with a spiral conveyor 10, and then fed to a thermal cracking furnace in which partial oxidizing reactions take place with air. For municipal refuse, the following parameters were set: a pitch of 300 mm and a diameter of 300 mm for the spiral portion of the spiral conveyor 10, a thickness T of 30 mm and a width of 80 mm for the spiral portion, and the rotation was controlled within a range of from about 2 to 10 rpm; the gap between the casing member 17 and the spiral conveyor 10 of the feeder was 25 mm.

Continuous operation was carried out for 500 hours to compare the example shown in Fig. 6 and the conventional screw conveyor type waste feeder. As a result, whereas in the case of the screw conveyor type waste feeder, eleven jams and problems due to blockages were caused, the feeder could be operated without a single stoppage in the case of the waste feeder using the spiral conveyor of this embodiment.

Even when waste easily causing entanglements, such as strips and stockings, or wet waste tending to form lumps, such as kitchen garbage, was charged into the waste feeder, blockage did not occur, permitting smooth transfer of the waste. The load on the waste feeder showed almost no change. Since the waste was fed into the incinerator in a constant amount, not affected by characteristics of the waste, fluctuations in the thermal cracking gas components could be inhibited by up to one-fifth as compared with that in the screw conveyor type waste feeder.

When using the waste feeder of the invention for a waste disposal furnace, as described above, improvement in the maintenance of constant feed of waste makes it possible to overcome one of the problems affecting the concentration of detrimental combustion products, such as dioxin, produced during or after the heat treatment. Because of the improvement of containment between the furnace interior and the open air, air or an oxidizer such as oxygen may be supplied in an amount corresponding to the average amount of waste supplied per unit period of time. Satisfactory containment permits achievement of a stable amount of reaction with the oxidizer or the like and a stable combustion or thermal cracking process, thus allowing reduction of production of dioxin and other toxic substances.

According to the present invention, as described above, the waste feeder of the invention is suitable as a waste feeder for a waste disposal plant provided with a spiral conveyor as a waste feeder, for example, for a waste incinerator, a waste thermal cracking furnace, a waste melting furnace, or a furnace heat-treating waste at a temperature of at least 300°C, and is provided with a spiral conveyor free from entanglement by string or fibrous refuse and which will not become blocked. As is clear from studies on the pitch and the diameter of the spiral portion of the spiral conveyor, the waste feeder of the invention is free of problems for long periods of time, and permits achievement of stable operation of the waste disposal plant. By providing a the waste feeder which is superior in maintaining a constant feed amount for the waste disposal furnace, it is possible to conduct stable operations not previously possible, and provides an advantage of inhibiting production of detrimental substances such as dioxin in the waste disposal furnace.

## Claims

1. A waste feeder used in a waste disposal apparatus comprising a spiral conveyor (10) having a spiral member (11) for transporting a waste and at least one rotation shaft (12) which is provided at least at one end of said spiral member, and a casing member (17) for covering at least a part of the spiral conveyor, wherein said casing member (17) has an opening on the bottom for supplying waste into a furnace.

2. The waste feeder according to claim 1, wherein said spiral conveyor has one single rotation shaft (12).

3. The waste feeder according to claim 1, wherein said spiral conveyor has a plurality of parallel shaft (12).

4. The waste feeder according to any one of the preceding claims, wherein said casing member (17) comprises a lower casing member arranged below the spiral conveyor and having a lignin layer formed thereto.

5. The waste feeder according to any one of the preceding claims, wherein a gap of between o to 150 mm is provided between the spiral member (11) and the casing member (17).

6. The waste feeder according to claim 1, wherein said spiral member (11) has a spiral having a pitch within a range of 100 to 500 mm.

7. The waste feeder according to claim 1, wherein said spiral member (11) has an outer diameter of 50 to 500 mm.

8. The waste feeder according to claim 1, wherein said spiral member (11) rotates at 1 to 30 rpm.

9. Use of a waste feeder of any one of claims 1 to 8 in a waste disposal apparatus **characterized in that**:
a waste disposal apparatus is one selected from the group consisting if a waste incinerator, a waste thermal cracking furnace, a waste melting furnace, and a furnace for heat-treating waste at a temperature of at least 300°C.

## Patentansprüche

1. Abfallzuführer, der in einer Abfallsbeseitigungsvorrichtung verwendet wird, umfassend einen Spiralförderer (10), der ein Spiralelement (11) zum Transportieren eines Abfalls und mindestens eine Rotationswelle (12) besitzt, die zumindest an einem Ende des Spiralelements vorgesehen ist, und ein Gehäuseelement (17) zum Abdecken zumindest eines Teils des Spiralförderers, wobei das Gehäuseelement (17) eine Öffnung an dem Boden zum Zuführen von Abfall in einen Ofen besitzt.

2. Abfallzuführer nach Anspruch 1, wobei der Spiralförderer eine einzelne Rotationswelle (12) besitzt.

3. Abfallzuführer nach Anspruch 1, wobei der Spiralförderer eine Mehrzahl paralleler Wellen (12) besitzt.

4. Abfallzuführer nach einem der vorhergehenden Ansprüche, wobei das Gehäuseelement (17) ein unteres Gehäuseelement aufweist, das unterhalb des Spiralförderers angeordnet ist und eine darauf gebildete Ligninschicht besitzt.

5. Abfallzuführer nach einem der vorhergehenden Ansprüche, wobei ein Spalt von zwischen 0 und 150 mm zwischen dem Spiralelement (11) und dem Gehäuseelement (17) vorgesehen ist.

6. Abfallzuführer nach Anspruch 1, wobei das Spiralelement (11) eine Spirale mit einer Ganghöhe innerhalb eines Bereichs von 100 bis 500 mm besitzt.

7. Abfallzuführer nach Anspruch 1, wobei das Spiralelement (11) einen Außendurchmesser von 50 bis 500 mm besitzt.

8. Abfallzuführer nach Anspruch 1, wobei das Spiralelement (11) bei 1 bis 30 U/min rotiert.

9. Verwendung eines Abfallzuführers nach einem der Ansprüche 1 bis 8 in einer Abfallbeseitigungsvorrichtung, **dadurch gekennzeichnet, dass**:
eine Abfallbeseitigungsvorrichtung eine solche ist, die aus der Gruppe bestehend aus einem Abfallverbrennungsofen, einem Ofen zum thermischen Aufbrechen von Abfall, einem Abfallschmelzofen, und einem Ofen zum Wärmebehandeln von Abfall bei einer Temperatur von mindestens 300°C ausgewählt ist.

## Revendications

1. Dispositif d'amenée de déchets utilisé dans un appareil d'élimination des déchets comprenant un convoyeur à spirale (10) présentant un organe en spirale (11) destiné à transporter des déchets, et au moins un axe de rotation (12) qui est prévu à une extrémité au moins dudit organe en spirale, et un organe de boîtier (17) destiné à recouvrir au moins une partie du convoyeur à spirale, dans lequel ledit organe de boîtier (17) présente une ouverture dans le bas, pour apporter les déchets dans un four.

2. Dispositif d'amenée de déchets selon la revendication 1, dans lequel ledit convoyeur à spirale possède un seul axe de rotation (12).

3. Dispositif d'amenée de déchets selon la revendication 1, dans lequel ledit convoyeur à spirale possède plusieurs axes parallèles (12).

4. Dispositif d'amenée de déchets selon l'une quelconque des revendications précédentes, dans lequel ledit organe de boîtier (17) comprend un organe de boîtier inférieur disposé en dessous du convoyeur à spirale, et sur lequel est formée une couche de lignine

5. Dispositif d'amenée de déchets selon l'une quelconque des revendications précédentes, dans lequel un espace situé entre 0 et 150 mm est prévu entre l' organe en spirale (11) et l'organe de boîtier (17).

6. Dispositif d'amenée de déchets selon la revendication 1, dans lequel ledit organe en spirale (11) présente une spirale ayant un pas situé dans une plage de 100 à 500 mm.

7. Dispositif d'amenée de déchets selon la revendication 1, dans lequel ledit organe en spirale (11) a un diamètre extérieur de 50 à 500 mm.

8. Dispositif d'amenée de déchets selon la revendication 1, dans lequel ledit organe en spirale (11) tourne à une vitesse de 1 à 30 tours/minute

9. Utilisation d'un dispositif d'amenée de déchets selon l'une quelconque des revendication 1 à 8 dans un appareil d'élimination de déchets, **caractérisé en ce que** :
un appareil d'élimination de déchets est un appareil sélectionné à partir du groupe composé d'un incinérateur de déchets, d'un four de craquage thermique de déchets, d'un four de fusion de déchets, et d'un four pour le traitement thermique de déchets à une température d'au moins 300°C.
